# EUROPÄISCHE PATENTANMELDUNG

(11) **EP 0 880 107 A2**
(43) Veröffentlichungstag der Anmeldung: **25.11.1998**
(21) Anmeldenummer: 98109016.0
(22) Anmeldetag: 18.05.1998
(51) Int. Cl.: G06K 19/077

(54) **Chipmodul für eine Chipkarte**

(30) Priorität: 21.05.1997 DE 19721281
(71) Anmelder: ODS Landis & Gyr GmbH & Co. KG, 85375 Neufahrn (DE)
(72) Erfinder: Schmidt, Frank Dr., D 99891 Fischbach (DE)
(74) Vertreter: Grünecker, Kinkeldey, Stockmair & Schwanhäusser Anwaltssozietät

(57) **Zusammenfassung**

Chipmodul (1) für eine Chipkarte mit einem Trägersubstrat (2), mindestens einem an dem Trägersubstrat (2) angeordneten IC (4) und einer den IC (4) abdeckenden, mit dem Trägersubstrat (2), bevorzugt durch Formpressen, verbundenen Abdeckung (5), wobei das Trägersubstrat (2) mindestens eine Öffnung (12) aufweist, deren Randbereich (14) zumindest abschnittsweise zum Bilden von mindestens einer Hinterschneidung (11, 16) umgeformt ist und das Abdeckmaterial zumindest bereichsweise in die Öffnung (12) und die Hinterschneidung (11, 16) eingeflossen ist, und wobei die mindestens eine Hinterschneidung (11, 16) durch Einprägen von Vertiefungen an der Rückseite (6) des Trägerfilms (2) derart geformt ist, daß auf der Vorderseite (3) entsprechende Erhöhungen (10) ausgebildet sind, so daß die umgeformten Randbereiche (14) über die von dem Trägersubstrat (2) aufgespannte Ebene hinausragen, wobei zumindest ein Teil der nach oben ragenden Randbereiche (14) einen Winkel (α) von kleiner 90° zu einem angrenzenden ebenen Randbereich (13) aufweist.

## Beschreibung

Die vorliegende Erfindung betrifft ein Chipmodul für eine Chipkarte gemäß dem Oberbegriff von Anspruch 1. Des weiteren bezieht sich die Erfindung auf eine dieses Chipmodul umfassende Chipkarte gemäß Anspruch 16.

Von den verschiedenen Möglichkeiten, Chipmodule aufzubauen, haben sich insbesondere die Verfahren durchgesetzt, bei denen der IC auf einen flexiblen Film montiert wird, der gewünschte Kontaktzüge aufweist. Bei der Anbringung des IC's an dem Trägerfilm haben sich heute insbesondere die TAB-Technik (tape automated bonding) sowie die Draht-Bond-Technik etabliert. Diesen Verfahren ist jedoch gemeinsam, daß der IC von einer Abdeckung (Verkappung) versiegelt werden muß. Die Abdeckung wird z.B. durch ein Kunststofformpressen oder andere Techniken aufgebracht. Zur Anwendung kommen z.B. mouldbare Epoxidpreßmassen. Beispiele für gattungsgemäße Chipmodule sind aus der DE-OS 30 29 667 bekannt.

Diese Chipmodule werden in Chipkarten eingesetzt und unterliegen dort Belastungen, die auch eine große Anforderung an die Anbindung der Abdeckung an das Trägersubstrat stellen. Insbesondere beim einseitigen Anbringen der Abdeckung an das Trägersubstrat sind diesbezüglich einige Probleme zu überwinden. Z.B. wurde vorgeschlagen, ein zusätzliches Epoxidtape zu verwenden, um die Anbindung zu verbessern. Jedoch ist ein derartiger Vorschlag für die Verwendung in der Massenproduktion zu teuer.

Ein gattungsgemäßes Chipmodul ist aus der DE 690 13 220 T2 bekannt. Bei einer Ausführungsform sind in einem Metallband Öffnungen angeordnet, die der Rückseite des Metallbandes zugeordnete Hinterschneidungen aufweisen. In die Hinterschneidungen dringt die den Chip abdeckende Kunststoffmasse ein, um eine Verankerung der Kunststoffabdeckung am Metallband zu erzielen. Eine weitere Ausführungsform zeigt ein dünnes Metallband, das örtliche Vertiefungen mit zugeordneten Öffnungen umfaßt, die ebenfalls zur Verankerung des Kunststoffes dienen.

Aus dem deutschen Gebrauchsmuster 79 31 219 ist eine Halbleiter-Vorrichtung bekannt, die eine metallische Platte und einen Körper aus Kunststoff aufweist. Der Körper aus Kunststoff schließt mindestens ein Plättchen aus Halbleitermaterial und gewünschte elektrische Anschlüsse ein. Um eine gute Anbindung des Körpers aus Kunststoff an der Metallplatte zu erreichen, werden in die Metallplatte im wesentlichen pilzförmige Vorsprünge eingeprägt, an denen der Körper aus Kunststoff verankert wird. Zwar bietet diese Methode bereits eine einigermaßen gute Anbindung. Jedoch müssen zur Ausgestaltung der Vorsprünge beträchtliche Umformungen vorgenommen werden, die, um ein Verziehen der Metallplatte zu verhindern, hohe Anforderungen an die Fertigungstechnik stellen.

Darüber hinaus müssen Chipmodule einer Chipkarte relativ hohe Biegebelastungen aushalten können. Die bekannte Verankerung erfolgt nachteilig mit relativ großem Abstand zur Biegelinie der Metallplatte, weshalb relativ große Kräfte an der Befestigungsstelle wirken und es zu einem frühzeitigen Versagen der Verbindung kommen könnte.

Es ist daher die Aufgabe der vorliegenden Erfindung, ein für die Massenproduktion geeignetes Chipmodul bereitzustellen, bei dem eine verbesserte Anbindung der Abdeckung an das Trägersubstrat erfolgt.

Diese Aufgabe wird erfindungsgemäß durch ein Chipmodul gemäß den Merkmalen des Anspruchs 1 gelöst.

Wenn zumindest einige der nach oben ragenden Randbereiche einen Winkel von kleiner 90° zu einem angrenzenden ebenen Randbereich aufweisen, dann sind zusätzlich durch den Verlauf der Randbereiche Hinterschneidungen gebildet. Diese Randbereiche werden dann ähnlich wie Widerhaken von dem Abdeckmaterial umgossen und verbessern die Verankerung nochmals.

Damit das Einfließen des Abdeckmaterials vereinfacht wird und die Verankerung nochmals verbessert ist, ist die mindestens eine Hinterschneidung durch Einprägen von Vertiefungen in den Trägerfilm derart geformt, daß auf der Vorderseite entsprechende Erhöhungen ausgebildet sind, so daß die umgeformten Randbereiche über die von dem Trägersubstrat aufgespannte Ebene hinausragen. Wenn die Kanäle entsprechend tief eingeformt sind, stehen auch die seitlichen Öffnungsbereiche der Kanäle über der Ebene des Trägerfilms hinaus, so daß die Öffnungen von einem dreidimensional sich erstreckenden Rand umgrenzt sind, der abschnittsweise vollständig vom Abdeckmaterial eingeschlossen wird.

Des weiteren wird eine Verankerung erzielt, die sich in die Ebene des Trägersubstrates erstreckt und daher im wesentlichen keinen Abstand mehr zur Biegelinie des Trägersubstrates aufweist. Hierdurch werden nur geringe Belastungen verursacht. Das Abdeckmaterial fließt durch die Öffnungen in die Hinterschneidungen hinein, wodurch das Trägersubstrat auf der Seite der Hinterschneidungen vollflächig eben verbleiben kann, ohne daß zusätzlicher Platz benötigt wird. Eine solche Anordnung eignet sich insbesondere für das einseitige Anbringen einer Abdeckung an ein Trägersubstrat.

Gemäß einer Ausführungsform kann das Trägersubstrat ein Trägerfilm sein. Diese Ausgestaltung wird bei den meisten Anwendungsfällen verwendet und ist eine in dieser Technik weit verbreitete und bestens bewährte Anwendungsform. Durch die relativ geringe Verformung am Randbereich der Öffnungen ist die vorliegende Erfindung verfahrenstechnisch günstig für relativ dünne Trägerfilme anwendbar.

Ein besonderer Vorteil ist durch eine Variante gegeben, bei der der Trägerfilm ein Leadframe ist. Der Leadframe läßt sich sehr gut für das Ausformen der Öffnungen und Hinterschneidungen verwenden. Des weiteren stellt ein Leadframe günstige Verfahrensbedingungen bereit, da die Chipmodule bei den einzelnen Herstellungsschritten bis zum abschließenden Trennen aneinandergereiht bleiben.

Eine besonders günstige Ausgestaltung sieht vor, daß der IC auf einer Oberseite des Trägerfilms und die mindestens eine Hinterschneidung an einer Rückseite des Trägerfilms angeordnet sind, da bei dieser Konstruktion eine einseitige Abdeckung vollkommen ausreichend ist.

Damit die Rückseite des Trägerfilms eben ausgestaltet ist und somit sich das Einbringen in die Chipkarte vereinfacht, kann das Abdeckmaterial in den Hinterschneidungen und den Öffnungen im wesentlichen eben in die Rückseite des Trägerfilms übergehen. Das hat auch den Vorteil, daß die Rückseite des Trägerfilms lediglich gegen eine ebene Fläche beim Formen der Abdeckung gedrückt werden muß, um die Hinterschneidung in dieser Richtung zu verschließen und ein Ausfließen des Abdeckmaterials zu verhindern.

Die Verankerung an dem Trägerfilm kann dadurch verbessert werden, daß die Hinterschneidungen als an der Rückseite des Trägerfilms angeordneter Kanal oder angeordnete Kanäle ausgebildet sind. Die Kanäle können sich vollständig mit Abdeckmaterial füllen, wodurch eine Verankerung an der Rückseite des Trägerfilms über einen relativ großen Bereich stattfindet und Abschnitte des Trägerfilms vollständig mit in die Abdeckung eingegossen sind.

Die Kanäle können durch Einprägen von Vertiefungen an der Rückseite des Trägerfilms geformt sein. Diese Vorgehensweise gestaltet sich einfacher und kostengünstiger, als das Einformen der Kanäle auf eine andere Weise, z.B. durch Fräsen.

Als fertigungstechnisch günstig hat sich auch eine Ausführungsform erwiesen, bei der sich ein Kanal jeweils von einer Öffnung zur nächsten Öffnung erstreckt. Das Abdeckmaterial kann dann an der Rückseite des Trägersubstrates ein einheitliches Verankerungselement bilden.

Eine besonders günstige Ausführungsform sieht vor, daß die Öffnungen auf einer Kreisbogenlinie angeordnet sind und ein im Querschnitt im wesentlichen dreiecks- bzw. trapezförmiger Kanal mit der Kreisbogenlinie als Mittellinie in das Trägersubstrat eingeprägt ist. Eine derartige symmetrische Ausgestaltung läßt eine Plazierung des IC's genau in der Mitte zu. Darüber hinaus kommt es bei der Herstellung zu einer symmetrischen Prägebelastung, wodurch ein Verzug des Trägersubstrates verhindert wird. Bei einer derartigen Ausgestaltung ist z.B. ein an der Rückseite in den Kanälen angeordneter Kreisring aus Abdeckmaterial über sich durch die Öffnungen erstreckende Stege mit der Abdeckung an der Oberseite des Trägerfilms verbunden. Die an ein solches Chipmodul gestellten Belastungsanforderungen sind ohne weiteres mit dieser Anordnung erreichbar.

Wie bereits erwähnt, können die Öffnungen und die Kanäle einen Aufnahmebereich umgrenzen, auf dem der mindestens eine IC aufgebracht ist. Die Umgrenzung kann in jeglicher geeigneter geometrischer Form, z.B. rechteckig, kreisförmig oder dreieckig erfolgen.

Die Öffnungen können auch im wesentlichen in Form eines n-Ecks um den Aufnahmebereich herum gruppiert sein. Wichtig ist hierbei, daß eine gleichmäßige Verbindung des Trägersubstrates mit der Abdeckung erfolgt, indem die Öffnungen entsprechend um den IC herum gruppiert sind.

Dabei können die Öffnungen einen n-eckigen und/oder kreisförmigen Querschnitt aufweisen, was letztendlich von der Form der auszubildenden Hinterschneidung abhängt.

Damit der Trägerfilm ausreichend beim Herstellungsvorgang zentriert werden kann, können mindestens zwei Öffnungen durch einen Durchbruch derart miteinander verbunden sein, daß der zwischen den mindestens zwei Öffnungen befindliche, von dem Durchbruch bereichsweise umgrenzte Materialbereich des Trägerfilms als Niederhaltezunge über die Abdeckung seitlich übersteht. Die Möglichkeit des Niederhaltens unmittelbar angrenzend der Abdeckung ist insbesondere bei den bei der Herstellung der Abdeckung aufgebrachten Drücken geboten. Durch das Einformen der Öffnungen ist der Trägerfilm in diesem Bereich etwas geschwächt, wodurch das Niederhalten und Fixieren des Trägerfilms für die gewünschte Maßhaltigkeit sorgt.

Wichtig ist das Niederhalten insbesondere dann, wenn mindestens ein Potentialtrennkanal vorgesehen ist, der den Trägerfilm zumindest im Bereich der Abdeckung in getrennte Bereiche unterteilt, wobei mindestens ein Durchbruch Bestandteil des Potentialtrennkanals ist. Die verschiedenen Kontaktflächen auf dem Trägerfilm müssen eine ausreichende Potentialtrennung aufweisen, was durch einen Potentialtrennkanal erfolgt. Dieser Potentialtrennkanal kann jedoch, je nach seiner Lage, den Aufnahmebereich des Trägerfilms (oder der entsprechenden Kontaktzüge), der sich unterhalb der Abdeckung befindet, in mehrere Teile zerschneiden. Damit sich diese Abschnitte bei dem Formen der Abdeckung nicht verwerfen, ist der Potentialtrennkanal so gelegt, daß er einen Umweg über mindestens einen Durchbruch macht, so daß zumindest der größte abgetrennte Teil des Aufnahmebereiches jeweils mindestens eine entsprechende Niederhaltezunge aufweist, durch die er fixiert werden kann. Das Abdeckmaterial füllt auch den Potentialtrennkanal zur Verbesserung der Potentialtrennung aus. Da dieser jedoch in aller Regel keine Hinterschneidungen aufweist, dient er nicht zur Verankerung der Abdeckung am Trägerfilm.

Damit beim Herstellungsvorgang der Abdeckung kein Abdeckmaterial durch den Potentialtrennkanal entweichen kann, kann dieser in der Nähe des Randbereichs der Abdeckung einen heraustrennbaren Steg aufweisen, der die Kontaktbereiche miteinander verbindet. Dieser Steg wird dann nach dem Aushärten der Abdeckung wieder herausgestanzt, damit der Potentialtrennkanal seine gewünschte Wirkung entfalten kann.

Um Biegespannungen besser von dem IC und der Verankerung der Abdeckung fernhalten zu können, sind bei einer weiteren Ausführungsform außerhalb der Abdeckung und um diese herum voneinander beabstandete Entlastungsschlitze vorgesehen. Hierdurch werden am Randbereich des Chipmoduls eingeleitete Kräfte bzw. Momente weit weniger wirksam auf den Aufnahmebereich übertragen.

Des weiteren bezieht sich die Erfindung auf eine Chipkarte mit einem Chipmodul nach einem der Ansprüche 1 bis 15. Dabei ist zu beachten, daß die Erfindung sowohl auf Chipkarten mit Kontaktflächen als auch auf kontaktlose Karten bzw. Hybridkarten anwendbar ist. Bevorzugterweise werden die Chipmodule in ausgefräste Taschen der Chipkarten eingebracht.

Es besteht aber auch durchaus die Möglichkeit, die Abdeckung sofort als Chipkarte auszubilden, wobei selbstverständlich die erfindungsgemäße Verankerung erhalten bleibt. Eine solche Ausgestaltung würde sich insbesondere für eine Minichipkarte des ID-000-Formats eignen. Jedoch ist auch die Herstellung anderer gängiger Chipkartenformate denkbar. Zumindest kann der Grundkörper der Chipkarte derart hergestellt und mit entsprechenden Oberflächenschichten versehen werden.

Das Chipmodul kann durch ein Verfahren hergestellt werden, bei dem mindestens ein IC an einem Trägersubstrat angebracht und von einer mit dem Trägersubstrat verbundenen, bevorzugt mittels Formpreßtechnik hergestellten, Abdeckung abgedeckt wird. Das Verfahren zeichnet sich dadurch aus, daß Öffnungen in das Trägersubstrat eingebracht werden, deren Randbereiche zumindest abschnittsweise zum Bilden von Hinterschneidungen umgeformt werden, in die beim Herstellen der Abdeckung durch die Öffnungen hindurchtretendes Abdeckmaterial hineinfließt.

Durch diese Vorgehensweise ist es möglich, die Abdeckung einseitig an einem Trägersubstrat anzubringen und dennoch an der Rückseite zu verankern. Das Verfahren eignet sich hervorragend für die Massenproduktion von Chipmodulen für eine Chipkarte, da es sich um einfach auszuführende Verfahrensschritte handelt.

Günstigerweise können die Hinterschneidungen durch einen Stanz-/Prägevorgang hergestellt werden. Bezeichnend für das Verfahren ist insbesondere, daß von der Geometrie her nur relativ einfache Ausstanzungen und Einprägungen vorgenommen werden müssen, um die entsprechende Wirkung zu erzielen.

Ein weiterer bevorzugter Verfahrensschritt besteht darin, daß die Hinterschneidungen durch Einprägen von Kanälen erzeugt werden, die entsprechende Erhöhungen auf der gegenüberliegenden Seite des Trägersubstrates aufwerfen. Diese Erhöhungen werden dann von dem Abdeckmaterial im wesentlichen vollständig, also auch von der Kanalseite her, eingeschlossen. Hierdurch sind Bereiche des Trägersubstrates innerhalb der Abdeckung integriert und sorgen für die gewünschte Anbindung.

Als vorteilhaft hat sich ein weiterer Verfahrensschritt herausgestellt, bei dem die Kanäle vollständig mit Abdeckmaterial gefüllt werden, wobei der zu füllende Formhohlraum der Kanäle durch Aufdrücken des Trägersubstrats auf eine im wesentlichen ebene Formunterlage einseitig verschlossen wird. Von der Rückseite des Trägersubstrates her müssen also keine besonderen Formerfordernisse erfüllt werden. Vielmehr reicht eine ebene Formplatte vollständig aus, um die gewünschte Formpressung zu erreichen. Die Kanäle selbst bilden dabei die Formhohlräume, die mit Abdeckmaterial befüllt werden.

Im folgenden werden Ausführungsbeispiele der Erfindung anhand einer Zeichnung näher erläutert. Es zeigen:
- Fig. 1: ein erfindungsgemäßes Chipmodul in Draht-Bond-Technik in einer Querschnittsansicht,
- Fig. 2: eine Querschnittsansicht durch ein Trägersubstrat mit angebrachter Abdeckung, außerhalb des IC-Bereiches geschnitten,
- Fig. 3: eine Stanzmaske des Trägersubstrats gemäß Figur 2 in einer Draufsicht,
- Fig. 4: eine Ausführungsform der Öffnungen in dem Trägersubstrat vor dem Prägevorgang,
- Fig. 5: die Ausführungsform aus Figur 4 nach dem Prägevorgang,
- Fig. 6: eine Querschnittsansicht entlang der Linie VI-VI der Figur 5 geschnitten,
- Fig. 7: eine weitere Ausführungsform des Trägersubstrates in einer perspektivischen Draufsicht,
- Fig. 8: die Ausführungsform aus Figur 7 in einer perspektivischen Unteransicht,
- Fig. 9: das Trägersubstrat aus Figur 8 mit angespritzter Abdeckung,
- Fig. 10: ein Chipkartengrundkörper vor dem Einsetzen des Chipmoduls und
- Fig. 11: eine vergrößerte Querschnittsansicht der Aufnahmevertiefung am Chipkartengrundkörper vor dem Einsetzen des Chipmoduls.

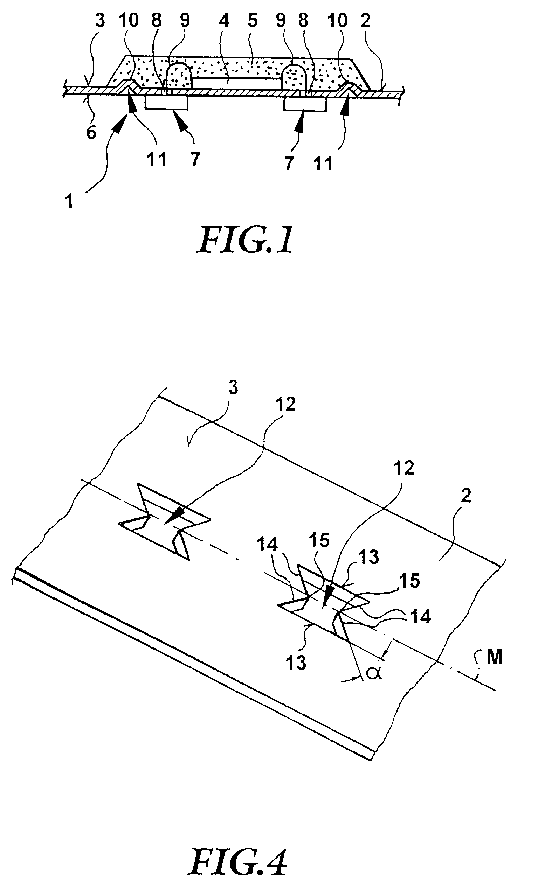

In der Figur 1 ist ein Chipmodul 1 dargestellt, das im wesentlichen aus einem Trägerfilm 2, einem auf der Oberseite 3 des Trägerfilms angeordneten IC 4 und einer den IC 4 umgebenden Abdeckung 5 aus einem Kunststoffmaterial besteht. Auf der Unterseite 6 des Trägerfilms 2 sind bei diesem Ausführungsbeispiel die Kontaktstellen 7 aufgebracht. Durch den Trägerfilm 2 erstrecken sich neben dem IC 4 Durchgangsöffnungen 8, durch die mit dem IC 4 kontaktierte Bonddrähte 9 hindurchgeführt und mit den Kontaktstellen 7 verbunden sind. Die Abdeckung 5 umgibt ebenso die Bonddrähte 9 und deren Anschlußstellen.

In den Trägerfilm 2 sind erhöhte Arretierbereiche 10 eingeprägt, die in noch im folgenden näher beschriebener Weise ebenfalls von dem Abdeckmaterial der Abdeckung 5 umgeben sind. Hierzu bilden sich an der Unterseite 6 des Trägerfilms 2 durch die Einprägungen Kanäle 11 aus, die entsprechend mit Abdeckmaterial gefüllt sind.

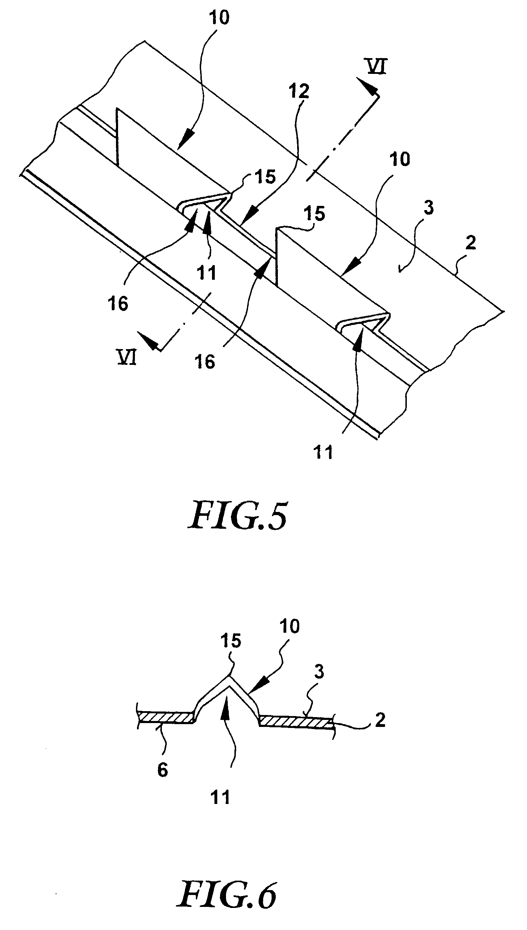

Anhand der Figuren 4 bis 6 wird nun die Funktionsweise der Arretierbereiche 10 näher erläutert. In diesen Figuren ist lediglich der Trägerfilm 2 zur besseren Veranschaulichung dargestellt. In diesen sind Arretieröffnungen 12 eingestanzt, die jeweils zwei parallele Seiten 13 und jeweils vier im spitzen Winkel α zu den Seiten 13 angeordnete Querseiten 14 aufweisen. In der Draufsicht sehen die Arretieröffnungen 12 wie ein doppelter Schwalbenschwanz aus, wobei die kurzen geraden Seiten der Schwalbenschwänze identisch sind und die Seiten 13 die beabstandeten, langen Seiten der Schwalbenschwänze bilden. Die jeweils zusammengehörigen Querseiten 14 bilden eine Ecke 15 derart, daß die beiden Ecken 15 aufeinanderzuweisen und einen Randbestandteil der Arretieröffnung 12 bilden.

In der Figur 4 sind die Arretieröffnungen 12 vor einem nachfolgenden Prägeschritt dargestellt.

Die Prägung erfolgt mittels eines im Querschnitt dreieck- bzw. trapezförmigen Stempels im wesentlichen symmetrisch zur Mittellinie M von der Unterseite 6 des Trägerfilms 2 her. Hierdurch richten sich die zwischen den Arretieröffnungen 12 verbleibenden Stege zu den erwähnten Arretierbereichen 10 auf. Die Arretierbereiche 10 weisen dann etwa die Form eines Zeltes auf, wobei die in der Seitenansicht betrachteten Randbereiche 13, 14 der Arretieröffnungen 12 jeweils eine Schwalbenschwanzform mit entsprechenden Hinterschneidungen 16 aufweisen. Die Ecken 15 weisen einen geringeren Abstand auf, als die Hinterschneidungen 16, so daß sie Arretierhaken an der Oberseite 3 des Trägerfilms 2 bilden. Auf der Unter- oder Rückseite 6 umfassen die Arretierbereiche 10 ebenfalls Hinterschneidungen in Form von den erwähnten Kanälen 11.

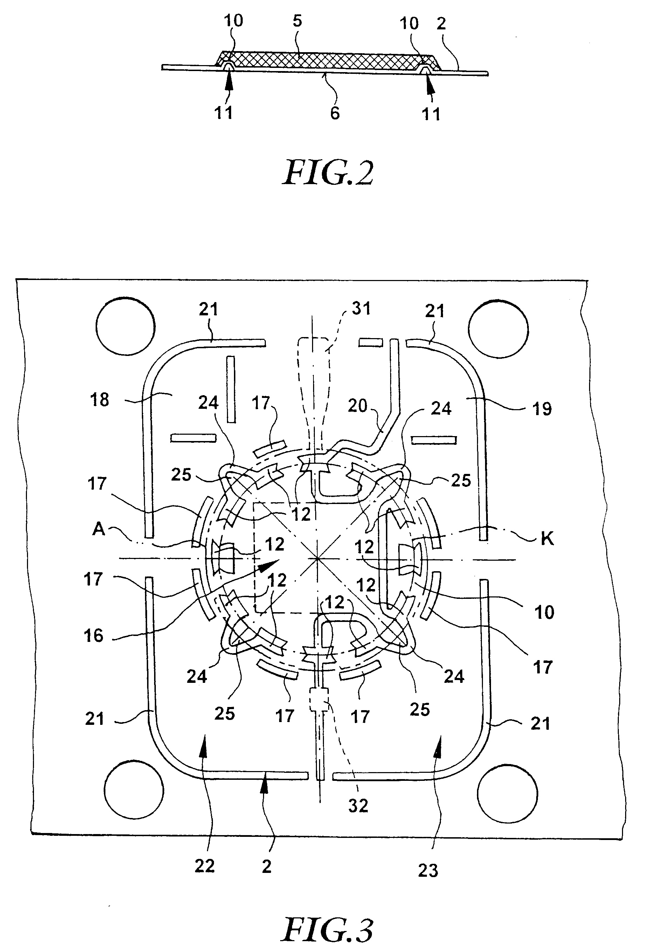

Wie anhand der Figur 2 gesehen werden kann, wird in einem nachfolgenden Verfahrensschritt die Abdeckung 5, insbesondere mittels eines Formpreßverfahrens, aufgebracht. Bei diesem Vorgang liegt die Unterseite 6 des Trägerfilms 2 auf einer ebenen Formunterlage auf, so daß die Kanäle 11 von unten geschlossen sind. Auf die Oberseite 3 wird dann eine entsprechende Gegenform aufgesetzt und anschließend die Kunststoffmasse in die Form eingebracht. Bei diesem Vorgang werden der IC 4 und die entsprechenden Anschlußstellen von der Kunststoffmasse umgeben. Die Kunststoffmasse fließt ebenfalls in die Öffnungen 12, Hinterschneidungen 16 und die Kanäle 11 hinein. Hierdurch gelangt Abdeckmaterial auch auf die Rückseite 6 des Trägerfilms 2 im Bereich der Kanäle 11, wodurch die Arretierbereiche 10 im wesentlichen vollständig von der Abdeckmasse umgeben sind. Insbesondere, wenn das Tragfilmmaterial eine schlechte Anbindungsneigung an den Abdeckkunststoff aufweist, wird durch diese Ausgestaltung ein sicheres Anhaften der Abdeckung 5 erreicht, die für einen dauerhaften Schutz des IC's 4 sorgt.

An dieser Stelle sei erwähnt, daß der Tragfilm 2 aus verschiedenen Materialien bestehen kann. Es besteht durchaus die Möglichkeit, die Kontakte 7 als Tragfilm 2 z.B. als Leadframe auszubilden.

Anhand der Figur 3 wird nun eine weitere bevorzugte Ausführungsform der Erfindung näher erläutert. Es wird nur auf die wesentlichen Unterschiede zum obigen Ausführungsbeispiel eingegangen. Für gleiche und ähnliche Bauteile werden gleiche Bezugsziffern verwendet.

Die in der Figur 3 gezeigte Stanzmaske stellt eine Ausführungsform dar, bei der die Arretierbereiche 10 und Arretieröffnungen 12 kreisförmig entlang einer Kreislinie K angeordnet sind. Dabei ist die Kreislinie K gleichzeitig die Mittellinie M der Arretieröffnungen 12 und Arretierbereiche 10. Die Arretieröffnungen 12 weisen im wesentlichen eine ähnliche Form auf, wie die in dem zuvor beschriebenen Ausführungsbeispiel und umgeben einen Aufnahmebereich 16, auf dem der IC 4 angeordnet wird.

Des weiteren ist strichpunktiert eine Kreislinie A eingezeichnet, die den späteren Außendurchmesser der aufgebrachten Abdeckung 5 wiedergibt. Außerhalb der Abdeckung 5 befinden sich noch Entlastungsschlitze 17, die konzentrisch zu den Arretieröffnungen 12 angeordnet sind und zusätzlich Biegebelastungen von der Abdeckung 5 fernhalten sollen.

An dem Trägerfilm 2 befinden sich die zwei Kontaktflächen 18 und 19. Diese Kontaktflächen 18 und 19 müssen eine Potentialtrennung aufweisen. Diese Potentialtrennung wird durch einen Potentialtrennkanal 20 hergestellt. Dieser trennt die von den Grenzkanälen 21 umgebene Modulfläche in zwei Bereiche auf (gemäß Figur 3 ein linker Bereich 22 und ein rechter Bereich 23).

Der Potentialtrennkanal 20 beginnt seitlich der Kontaktfläche 19 und läuft in den Bereich der Abdeckung 5 an einer oberen Arretieröffnung 12 hinein. Der Trennkanal 20 erstreckt sich unterhalb der Abdeckung 5 im wesentlichen (bis auf zwei Ausnahmen, die näher weiter unten beschrieben werden) derart, daß der Aufnahmebereich 16 zur Aufnahme des IC's 4 komplett dem linken Bereich 22 zugeordnet wird. Ausgehend von einer unteren Arretieröffnung 12 verläßt der Trennkanal 20 wieder den Abdeckbereich.

Der Potentialtrennkanal 20 weist in der Nähe des Randbereichs der Abdeckung 5 einen heraustrennbaren Steg 32 auf, der die Bereiche 22, 23 miteinander verbindet. Dieser Steg 32 verbleibt so lange im Potentialtrennakanal 20, bis die Abdeckung 5 ausgehärtet ist. Anschließend wird der Steg 32 herausgestanzt. Der Sinn liegt darin, das Abdeckmaterial nicht durch den Potentialtrennkanal 20 aus dem Abdeckbereich 16 herausfließen kann.

Gleichmäßig verteilt an vier Stellen sind jeweils zwei Arretieröffnungen 12 durch einen Durchbruch 24 miteinander verbunden. Der Durchbruch 24 erstreckt sich jeweils von unterhalb der Abdeckung 5 bis außerhalb der Kreislinie A, so daß vier über die Kreislinie A überstehende Niederhaltezungen 25 gebildet sind. Das Besondere auf der rechten Seite des Modulbereiches besteht darin, daß die Durchbrüche 24 Bestandteil des Potentialtrennkanals 20 sind.

Das in Figur 3 gezeigte Filmmaterial wird durch einen Stanzvorgang gemäß dem Stanzmuster dieser Figur gestanzt, so daß sich der Modulbereich, der von den Grenzkanälen 21 umgrenzt ist, deutlich hervorhebt. Anschließend wird in einem Prägeschritt mittels eines im Querschnitt trapezförmigen Ringstempels ein die Kreislinie K als Mittellinie aufweisender Ringkanal 11 an der Rückseite 6 des Trägerfilms 2 eingeprägt. Dabei dienen die Niederhaltezungen 25 zur Fixierung des Aufnahmebereiches, so daß dieser zentrisch zum Kanal 11 verbleibt.

In einem nachfolgenden Verfahrensschritt wird auf die Oberseite 3 des Trägerfilms 2 der IC 4 aufgesetzt und mit den Kontaktstellen 18 und 19 verbunden.

Das Trägermaterial wird dann in eine Formpreßstation überführt, in der wiederum Niederhalter auf die Zungen 25 drücken und an der Rückseite 6 des Trägermaterials eine ebene Formscheibe anliegt und auf der Oberseite eine entsprechend der Abdeckform angepaßte Matrize aufgesetzt wird. Anschließend wird Abdeckmaterial über den strichpunktiert angedeuteten Angußkanal 31 in die Form eingebracht. Das Abdeckmaterial umgibt den IC 4 und dringt in die Arretieröffnungen 12 ein und füllt den Ringkanal 11. Die Arretierbereiche 10 sind dann vollständig in dem Abdeckmaterial eingebettet, und durch das sich auf der Rückseite 6 befindliche Abdeckmaterial im Ringkanal 11 erfolgt eine sichere Anbindung der Abdeckung 5 an dem Trägerfilm 2. Der Steg 32 sorgt bei diesem Vorgang dafür, daß das Abdeckmaterial nicht auf der dem Angußkanal 31 gegenüberliegenden Seite im Bereich des Potentialtrennkanals 20 herausfließen kann.

Anschließend kann das Modul 1 ausgestanzt werden.

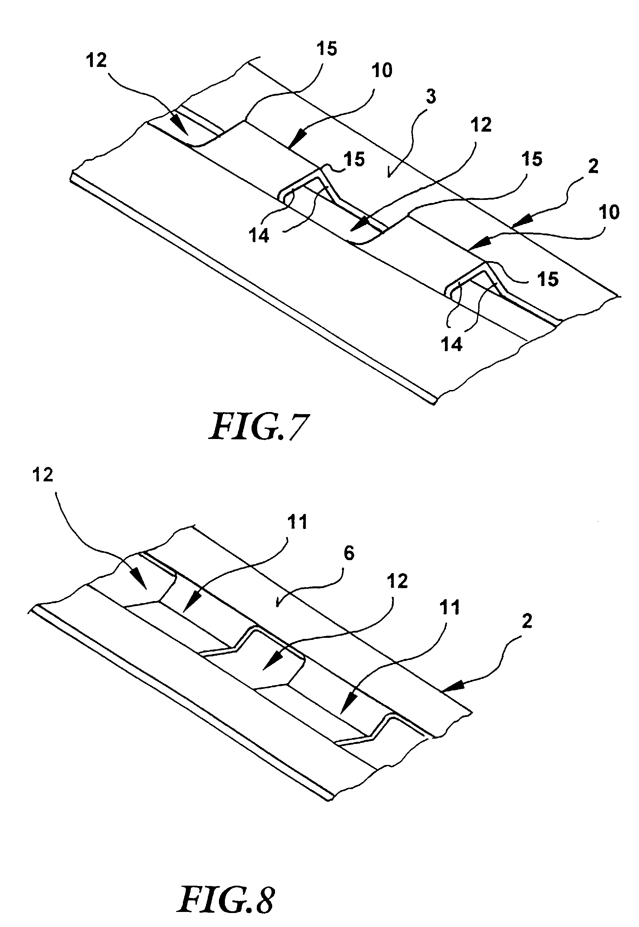

Anhand der Figuren 7 bis 9 wird eine weitere Ausführungsform der vorliegenden Erfindung näher erläutert. Auch hier werden für gleiche und ähnliche Bauelemente gleiche Bezugszeichen verwendet. Es wird nur auf die wesentlichen Unterschiede eingegangen.

Der wesentliche Unterschied besteht darin, daß die Arretierbereiche 10 gerade Querseiten 14 aufweisen, die zu den Längsseiten einen Winkel α von 90° umfassen. Die Arretieröffnung 12 weist daher in der Draufsicht eine Rechteckform auf.

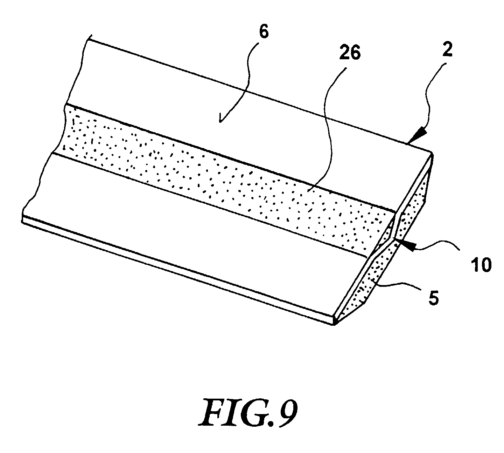

Anhand der Figur 9 ist sehr gut zu erkennen, wie das Abdeckmaterial die Arretierbereiche 10 umgibt. An der Rückseite 6 ist lediglich ein Streifen 26 von dem Abdeckmaterial zu erkennen, der bündig mit der Rückseite 6 abschließt, wodurch diese vollständig eben ist.

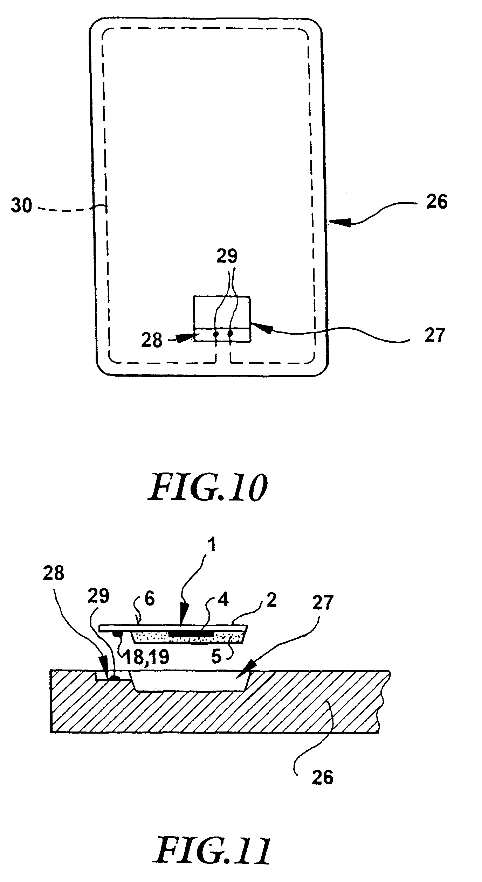

Anhand der Figuren 10 und 11 wird nun die Verwendung eines erfindungsgemäßen Chipmoduls 1 in einer Chipkarte näher erläutert.

In Figur 10 ist ein Chipkartengrundkörper 26 dargestellt, der eine ausgefräste Aufnahmetasche 27 zur Aufnahme des Chipmoduls 1 an seiner Oberseite aufweist. Die Aufnahmetasche 27 ist gestuft ausgeführt und weist einen in ihrer Tiefe niedrigeren Kontaktbereich 28 auf. Mit den Kontakten 29 des Kontaktbereiches 28 ist eine Antennenspule 30 verbunden, die in den Kartengrundkörper 26 eingebettet ist.

Das Chipmodul 1 wird in die Aufnahmetaschen 27 eingesetzt, wobei die Abdeckung 5 nach unten weist und die Kontaktflächen 18 und 19 mit den Kontakten 29 in Verbindung kommen. In beliebiger Weise wird dann das Chipmodul 1 in der Aufnahmetasche 27 verankert. Dies kann z.B. durch Aufkaschieren eines zusätzlichen Films erfolgen.

Es handelt sich hierbei um eine kontaktlose Chipkarte, die durch Induktion betrieben wird. Ein solches Verfahren eignet sich z.B. auch zum Herstellen einer Hybridkarte, wenn auf der Rückseite 6 des Chipmoduls 1 entsprechende Kontaktbahnen aufgebracht sind. Aber auch einfache Kontaktchipkarten sind auf diese Weise herstellbar, die keine Antennenspulen 30 aufweisen müssen.

Aufgrund der Tatsache, daß eine Verankerung der Abdeckung 5 an dem Trägerfilm 2 im wesentlichen in der Ebene des Trägerfilms 2 erfolgt, werden auch Biegebeanspruchungen entlang der Biegelinie des Trägerfilms 2 nur geringe Auswirkungen auf die Arretierung der Abdeckung 5 haben. Hierdurch wird eine dauerhafte Versiegelung des IC's 4 an dem Trägerfilm 2 erreicht, auch wenn die Abdeckung 5 nur einseitig an den Trägerfilm 2 angebracht wird.

## Patentansprüche

1. Chipmodul (1) für eine Chipkarte mit einem Trägersubstrat (2), mindestens einem an dem Trägersubstrat (2) angeordneten IC (4) und einer den IC (4) abdeckenden, mit dem Trägersubstrat (2), bevorzugt durch Formpressen, verbundenen Abdeckung (5), wobei das Trägersubstrat (2) mindestens eine Öffnung (12) aufweist, deren Randbereich (14) zumindest abschnittsweise zum Bilden von mindestens einer Hinterschneidung (11, 16) umgeformt ist und das Abdeckmaterial zumindest bereichsweise in die Öffnung (12) und die Hinterschneidung (11, 16) eingeflossen ist, und wobei die mindestens eine Hinterschneidung (11, 16) durch Einprägen von Vertiefungen an der Rückseite (6) des Trägerfilms (2) derart geformt ist, daß auf der Vorderseite (3) entsprechende Erhöhungen (10) ausgebildet sind, so daß die umgeformten Randbereiche (14) über die von dem Trägersubstrat (2) aufgespannte Ebene hinausragen, **dadurch gekennzeichnet**, daß zumindest ein Teil der nach oben ragenden Randbereiche (14) einen Winkel (α) von kleiner 90° zu einem angrenzenden ebenen Randbereich (13) aufweist.

2. Chipmodul (1) nach Anspruch 1, **dadurch gekennzeichnet,** daß das Trägersubstrat (2) ein Trägerfilm ist.

3. Chipmodul (1) nach Anspruch 2, **dadurch gekennzeichnet,** daß der Trägerfilm (2) ein Leadframe ist.

4. Chipmodul (1) nach einem der Ansprüche 1 bis 3, **dadurch gekennzeichnet,**
daß der IC (4) auf einer Oberseite (3) des Trägerfilms (2) und die mindestens eine Hinterschneidung (11, 16) an einer Rückseite (6) des Trägerfilms (2) angeordnet sind.

5. Chipmodul (1) nach einem der Ansprüche 1 bis 4, **dadurch gekennzeichnet,**
daß das Abdeckmaterial in den Hinterschneidungen (11, 16) und den Öffnungen (12) im wesentlichen eben in die Rückseite (6) des Trägerfilms (2) übergeht.

6. Chipmodul (1) nach einem der Ansprüche 1 bis 5, **dadurch gekennzeichnet,**
daß die Hinterschneidungen (11, 16) als an der Rückseite (6) des Trägerfilms (2) angeordneter Kanal (11) oder angeordnete Kanäle (11) ausgebildet sind.

7. Chipmodul (1) nach Anspruch 6, **dadurch gekennzeichnet,** daß sich ein Kanal (11) von einer Öffnung (12) zur nächsten Öffnung (12) erstreckt.

8. Chipmodul (1) nach einem der Ansprüche 1 bis 7, **dadurch gekennzeichnet,**
daß die Öffnungen (12) auf einer Kreisbogenlinie (K) angeordnet sind und ein im Querschnitt im wesentlichen dreiecks- bzw. trapezförmiger Kanal (11) mit der Kreisbogenlinie (K) als Mittellinie in das Trägersubstrat (2) eingeprägt ist.

9. Chipmodul (1) nach einem der Ansprüche 1 bis 8, **dadurch gekennzeichnet,** daß die Öffnungen (12) und die Kanäle (11) einen Aufnahmebereich (16) umgrenzen, auf dem der mindestens eine IC (4) aufgebracht ist.

10. Chipmodul (1) nach Anspruch 9, **dadurch gekennzeichnet,**
daß die Öffnungen (12) im wesentlichen in Form eines n-Ecks um den Aufnahmebereich (16) herum gruppiert sind.

11. Chipmodul (1) nach einem der Ansprüche 1 bis 10, **dadurch gekennzeichnet,**
daß die Öffnungen (12) einen n-eckigen und/oder kreisförmigen Querschnitt aufweisen.

12. Chipmodul (1) nach einem der Ansprüche 1 bis 11, **dadurch gekennzeichnet,**
daß mindestens zwei Öffnungen (12) durch einen Durchbruch (24) derart miteinander verbunden sind, daß der zwischen den mindestens zwei Öffnungen (12) befindliche, von dem Durchbruch (24) bereichsweise umgrenzte Materialbereich des Trägerfilms (2) als Niederhaltezunge (25) über die Abdeckung (5) seitlich übersteht.

13. Chipmodul nach Anspruch 12, **dadurch gekennzeichnet,**
daß mindestens ein Potentialtrennkanal (20) vorgesehen ist, der den Trägerfilm (2) zumindest im Bereich der Abdeckung (5) in getrennte Bereiche (22, 23) unterteilt, wobei mindestens ein Durchbruch (24) Bestandteil des Potentialtrennkanals (20) ist.

14. Chipmodul (1) nach Anspruch 13, **dadurch gekennzeichnet,**
daß der Potentialtrennkanal (20) in der Nähe des Randbereichs der Abdeckung (5) einen heraustrennbaren Steg (32) aufweist, der die Bereiche (22, 23) miteinander verbindet.

15. Chipmodul (1) nach einem der Ansprüche 1 bis 14, **dadurch gekennzeichnet,**
daß außerhalb der Abdeckung (5) und um diese herum voneinander beabstandete Entlastungsschlitze (17) angeordnet sind.

16. Chipkarte mit einem Chipmodul (1) nach einem der Ansprüche 1 bis 15.
